# EUROPÄISCHE PATENTSCHRIFT

(11) **EP 1 767 437 B1**
(45) Veröffentlichungstag und Bekanntmachung des Hinweises auf die Patenterteilung: **14.09.2011**
(21) Anmeldenummer: 06015191.7
(22) Anmeldetag: 21.07.2006
(51) Int. Cl.: B62D 6/04

(54) **Einrichtung zum Kompensieren von Schiefzieheffekten an einem Kraftfahrzeug**
Steering-pull compensation device for motor vehicle
Dispositif de compensation du desequilibre directionnel pour véhicule automobile

(30) Priorität: 22.09.2005 DE 102005045243
(43) Veröffentlichungstag der Anmeldung: 28.03.2007
(73) Patentinhaber: Volkswagen Aktiengesellschaft, 38436 Wolfsburg (DE)
(72) Erfinder: Brosig, Stefan, 29386 Hankensbüttel (DE); Weber, Bernd, 38118 Braunschweig (DE); Wahnschaffe, Nikolaus, 38444 Wolfsburg (DE)
(74) Vertreter: Mende, Dirk

(56) Entgegenhaltungen:
- EP-A- 1 331 158
- EP-A2- 0 787 642
- DE-A1- 10 011 639
- DE-A1- 19 536 989
- GB-A- 2 400 358
- US-A- 6 154 696

## Beschreibung

Die Erfindung bezieht sich auf eine Einrichtung zum Kompensieren von Schiefzieheffekten an einem Kraftfahrzeug über die Fahrzeuglenkung.

Schiefzieheffekte treten beispielsweise beim Bremsen infolge unterschiedlicher Bremskräfte an den Rädern einer Achse auf. Um ein solches bremseingriffbedingtes Schiefziehen zu vermeiden, wird in der DE 199 51 266 C1 vorgeschlagen, den langsameren Bremsenaktuator durch eine erhöhte Energi<ezufuhr schneller zu machen.

Die EP 0 822 130 B1 offenbart überdies die Möglichkeit, durch gezielte Leckage in einem hydraulischen System eine Lenkkorrektur vorzunehmen.

Aus der DE 100 53 604 A1 ist die Möglichkeit bekannt, bremseingriffbedingte Schiefzieheffekte durch einen Eingriff in die Lenkung des Fahrzeugs zumindest teilweise zu kompensieren.

Weiterhin wird in der DE 103 45 484 A1 ein System zur Kompensation von sperrdifferentialinfizierten Lenkradstörmomenten bei einem frontgetriebenen Kraftfahrzeug beschrieben. Auch in diesem Fall erfolgt ein Eingriff in die Lenkung. Zu diesem Zweck wird in Abhängigkeit einer Sperrdifferentialstellgröße ein Signal für ein Kompensationsmoment erzeugt, das dem Signal für das eigentliche Lenkmoment überlagert wird. Mit dem kombinierten Signal wird der Elektromotor einer elektromechanischen Lenkung beaufschlagt.

Ferner wird in der DE 102 44 070 A1 ein System beschrieben, mit dem über eine fahrsituationsabhängige Lenkerunterstützung ein variables Schiefziehverhalten eines Fahrzeugs korrigiert werden kann, das beispielsweise aufgrund eines falsch kalibrierten Lenkwinkelsensors, ungleichmäßigem Reifenverschleiß oder einer Fahrbahnneigung auftritt. Dabei wird zwischen einer Kurzzeitkorrektur und einer Langzeitkorrektur unterschieden. Die entsprechenden Korrekturgrößen werden aus dem Fahrbetrieb in Form eines Korrekturwinkels oder Korrekturmoments erlernt.

Aus der DE 195 36 989 A1 ist ein Lenksteuersystem bekannt, bei dem in Abhängigkeit einer erfassten Gierrate ein Lenkreaktionsmoment bestimmt und einem Stelldrehmoment aufgeschaltet wird, um ein unerwünschtes Gieren des Fahrzeugs zu kompensieren. Dieses aus der Gierrate bestimmte Lenkreaktionsmoment wird in Abhängigkeit der Antriebskraft modifiziert, um ein antriebskraftbedingtes Eigenlenken zu kompensieren. Die primäre Einflussgröße ist dabei die gemessene Gierrate. Antriebseinflüsse werden wie äußere Störgrößen behandelt. Über die Antriebskraftkomponente erfolgt lediglich eine Modifikation des auf der Gierrate beruhenden, korrigierenden Lenkreaktionsmoments.

Die EP 0 787 642 A2 offenbart eine Einrichtung zur Kompensation von antriebsbedingten Schiefzieheffekten. Hierzu werden entweder die Motordrehzahl oder das Antriebsmoment berücksichtigt. In einem Mikrocomputer ist ein funktioneller Zusammenhang zwischen den genannten Eingangsgrößen und dem antriebsbedingten Schiefziehen in einer Tabelle oder anhand einer Gleichung abgelegt. Mit der Motordrehzahl oder dem Antriebsmoment als Eingangsgröße wird hieraus eine Korrekturgröße bestimmt und über den Servomotor der Lenkung dargestellt.

Auch die US 6 154 696 A offenbart eine Einrichtung zur Kompensation von antriebsbedingten Schiefzieheffekten. Hierzu wird die Differenz der Antriebsmomente an den Rädern einer Achse bestimmt, woraus wiederum ein Kompensationsmoment bestimmt wird, das über den Servomotor der Lenkung dargestellt wird. Der entsprechende Korrekturwert wird aus einer Tabelle abgelesen.

Die vorliegende Erfindung steht im Zusammenhang mit Fahrzeugen, die aufgrund der Anordnung des Fahrzeugmotors und des Getriebes einen asymmetrischen Antriebstrang aufweisen, d.h. einen Antriebstrang, dessen zu den Fahrzeugrädern führende Antriebswellen eine unterschiedliche Länge aufweisen. Insbesondere bei Fahrzeugen mit quer eingebautem Motor ist dies häufig zu beobachten.

Bei einer Beaufschlagung der Antriebswellen mit einem Antriebsmoment kommt es in Abhängigkeit des jeweiligen Beugewinkels zu kardanischen Reaktionsmomenten. Diese Reaktionsmomente wirken an den Radträgern unmittelbar als Lenkmomente.

Bei ungleichen Beugewinkeln der Antriebswellen, die geometriebedingt bei nahezu jedem Einfedern des Fahrzeugs auftreten, gleichen sich die kardanischen Reaktionsmomente nicht aus, so dass es zu einer unerwünschten Lenkwirkung in Form eines Schiefzieheffekts kommt, wenn diesem nicht vom Fahrer entgegengewirkt wird. Vor allem bei einem schnellen Anfahren können aufgrund der Asymmetrie des Antriebsstrangs merkliche Kräfte am Lenkrad auftreten und den Fahrer irritieren.

Der Erfindung liegt die Aufgabe zugrunde, hier Abhilfe zu schaffen. Insbesondere zielt die Erfindung darauf ab, aus der Asymmetrie des Antriebsstrangs resultierende Schiefzieheffekte zu bekämpfen.

Diese Aufgabe wird durch eine Einrichtung zum Kompensieren von Schiefzieheffekten an einem Kraftfahrzeug über die Fahrzeuglenkung nach Anspruch 1 gelöst.

Ein Bremseingriff ist hierbei nicht vorgesehen. Auch ist es nicht erforderlich, den Fahrbetrieb kontinuierlich auszuwerten, wie dies bei einem Iernfähigen System nach der DE 102 44 070 A1 erforderlich wäre.

Ein messtechnisches Erfassen des Schiefziehens, beispielsweise über einen Gierratensensor, ist im Unterschied zu den obengenannten Systemen ebenfalls nicht notwendig.

Vielmehr stellt die Erfindung durch die Auswahl geeigneter Einflussgrößen ein sehr einfaches System zur Verfügung, mit dem sich Schiefzieheffekte, die aus einem asymmetrischen Antriebsstrang resultieren, sehr einfach vermeiden lassen. Erfindungsgemäß wird somit ein geometrie- und bauartbedingter Nachteil über die Lenkung kompensiert.

Ein weiterer Vorteil der erfindungsgemäßen Lösung besteht darin, dass sämtliche Parameter zur Bestimmung der Einflussgrößen für das Korrektursignal an heutigen Kraftfahrzeugen üblicherweise vorhanden sind. Durch die Nutzung von am Fahrzeug bereits verfügbaren Signalen kann auf zusätzliche Sensoren verzichtet werden. Die Eingangsparameter zur Korrektursignatermitttung können z.B. über ein Datenbussystem am Fahrzeugs bereitgestellt werden.

Weitere, vorteilhafte Ausgestaltungen der Erfindung sind in den Patentansprüchen angegeben.

So kann beispielsweis bei der Bestimmung des Korrektursignals eine Größe berücksichtigt werden, die den Einfederungszustand der angetriebenen Fahrzeugräder repräsentiert.

Alternativ oder ergänzend kann eine Lenkradgröße in die Bestimmung des Korrektursignals einfließen, die eine Funktion des Lenkradwinkels und/oder der Lenkradwinkelgeschwindigkeit und/oder des Lenkradmoments ist. Dies erlaubt es, einen möglichst genauen Eingriffszeitpunkt für die Korrektur zu identifizieren.

Gemäß einer weiteren, vorteilhaften Ausgestaltung ist die Antriebsgröße eine Funktion des Motormoments, der Motordrehzahl und der Getriebestellung. Diese kann beispielsweise über eine Berechnungsvorschrift oder ein Kennfeld definiert werden.

Die Einfederungszustandsgröße ist vorzugsweise eine Funktion der Beugewinkeldifferenz der Antriebswellen. Gegebenenfalls werden zu deren Bestimmung weiterhin die Federlage und/oder der Höhenstand des Fahrzeugs berücksichtigt.

In einer weiteren Ausgestaltung sind die in das Korrektursignal eingehenden Größen, nämlich die Antriebsgröße, die Einfederungszustandsgröße und eine gegebenenfalls berücksichtigte Lenkradgröße sehr einfach, nämlich multiplikativ miteinander verknüpft.

Für die Bestimmung des Stellsignals ist in der Fahrzeugslenkung ein Steuergerät vorgesehen, mit dem je nach Lenkungstyp ein Lenkmoment oder Lenkwinkel eingeregelt wird. Vorzugsweise weist das Steuergerät eine Schnittstelle zur Einkopplung von Korrektursignalen auf. Dies ermöglicht eine sehr einfache, fahrzeugsspezifische Korrektursignalerzeugung außerhalb der Lenkung, so dass einer Lenkung je nach Fahrzeugkonfiguration ein entsprechend angepasstes Korrektursignal zugeführt werden kann.

Um eine Überraschung des Fahrers zu vermeiden, wird gemäß einer vorteilhaften Ausgestaltung der Erfindung das Korrektursignal dem Stellsignal sprungfrei überlagert.

Die erfindungsgemäße Einrichtung zum Kompensieren von Schiefzieheffekten lässt sich an allen Lenkungen einsetzen, die bauartbedingt einen automatischen Eingriff über das Lenkmoment oder den Lenkwinkel der Fahrzeugräder erlauben.

So kann die Lenkung insbesondere als eine elektromechanische Lenkung oder als eine Überlagerungslenkung ausgeführt sein.

Nachfolgend wird die Erfindung anhand eines in der Zeichnung dargestellten Ausführungsbeispiels näher erläutert. Die Zeichnung zeigt in:
- Figur 1: eine schematische Ansicht eines Ausführungsbeispiels für eine elektromechanische Lenkung mit einer Einrichtung zum Kompensieren von Schiefzieheffekten, und in
- Figur 2: eine schematische Ansicht der Vorderachse eines Personenkraftfahrzeugs mit quer eingebautem Motor, das mit einer Einrichtung nach Figur 1 ausgestattet werden kann.

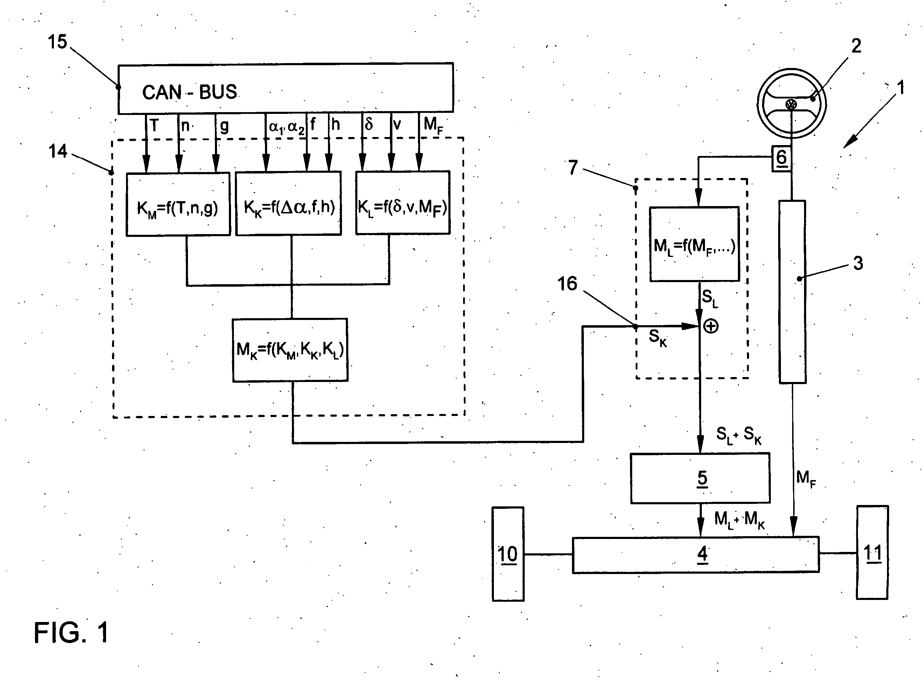

Das in Figur 1 dargestellte Ausführungsbeispiel zeigt eine elektromechanische Lenkung 1 mit einem Lenkrad 2, einer Lenksäule 3, einem Lenkgetriebe 4 und einem elektrischen Lenkungsaktuator 5. Über den Lenkungsaktuator 5 kann in Abhängigkeit eines vom Fahrer aufgebrachten Lenkmoments M_{F} ein Hilfslenkmoment M_{L} erzeugt werden, um den Fahrer beim Lenken zu unterstützen. Das vom Fahrer aufgebrachte Lenkmoment M_{F} oder eine korrespondierende Größe wird durch einen geeigneten Sensor 6 erfasst und als Signal s an ein Lenkungssteuergerät 7 übermittelt. Aus dem erfassten Lenkmoment M_{F} des Fahrers wird anhand von für das Fahrzeug vorgegebenen Kennlinien ein Hilfslenkmoment M_{L} ermittelt und über ein entsprechendes Stellsignal s am Lenkungsaktuator 5 eingestellt. An der Lenkung kommen somit beide Momente zur Wirkung. Da die Unterstützung kontinuierlich und stetig erfolgt, ist die Unterstützung am Lenkrad 2 nicht fühlbar.

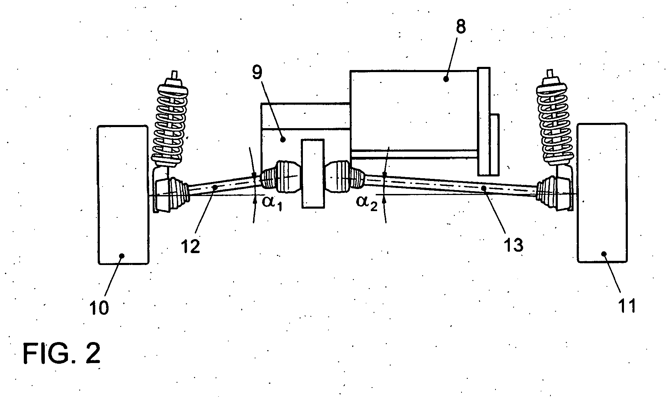

Figur 2 zeigt in schematischer Darstellung den quer eingebauten Fahrzeugmotor 8 und das Getriebe 9 des Fahrzeugs. Weiterhin ist Figur 2 zu entnehmen, dass die zu den Fahrzeugrädern 10 und 11 führenden Antriebswellen 12 und 13 eine deutlich verschiedene Länge aufweisen. Je nach Einfederzustand ergeben sich folglich an den Antriebswellen 12 und 13 unterschiedliche Beugewinkel α₁ und α₂. Bei einer Beaufschlagung der Antriebswellen 12 und 13 mit einem Antriebsmoment kommt es in Abhängigkeit des jeweiligen Beugewinkels α zu kardanischen Reaktionsmomenten, die als Lenkmomente auf die Radträger einwirken. Bei unterschiedlichen Beugewinkeln auf beiden Seiten können sich diese Reaktionsmomente nicht ausgleichen, so dass es ohne Gegenmaßnahmen geometriebedingt zu einem Schiefziehen des Fahrzeugs kommt. Am Lenkrad sind unter Umständen entsprechende Lenkkräfte spürbar.

Dieser Effekt tritt insbesondere beim Anfahren mit hohem Motordrehmoment und beim Abbremsen mit der Motorbremse auf. Er ist unabhängig vom Reibwert der Fahrbahn, der Betätigung der Bremsen und anderen äußeren Einflüssen wie Seitenwind oder Fahrbahnneigung. Diese Einflüsse können zwar ebenfalls einen Schiefzieheffekt auslösen, sind jedoch nicht Gegenstand der nachfolgend erläuterten Maßnahmen.

Der mit der Erfindung zu kompensierende, geometriebedingte Schiefzieheffekt ist vor allem abhängig vom Antriebsmoment des Fahrzeugmotors 8. Dementsprechend basiert die in Figur 1 schematische dargestellte Einrichtung 14 zum Kompensieren von Schiefzieheffekten auf der Erfassung einer das Antriebsmoment des Fahrzeugs repräsentierenden Größe K_{M}. Zudem wird das Einfederungsverhalten des Fahrzeugs in mindestens einer weiteren Einflussgröße K_{K} berücksichtigt. Auf der Basis dieser Informationen kann dann unter Berücksichtigung der für das Beugungsverhalten der Antriebswellen 12 und 13 relevanten Geometriedaten auf sehr einfache Art und Weise ein Korrektursignal errechnet werden, das ein den geometriebedingten Schiefzieheffekt ausgleichendes Moment M_{K} repräsentiert. Ein entsprechendes Signal s_{K} wird dann dem Stellsignal s_{L} für den Lenkungsaktuator 5 überlagert.

Die Aufschaltung des Korrektursignals s_{K} auf das Stellsignal s_{L} erfolgt sprungfrei, so dass der Fahrer den automatischen Lenkungseingriff am Lenkrad 2 nicht wahrnimmt. Dies kann beispielsweise über eine Integratorschaltung erfolgen.

Für die Erzeugung des Korrektursignals s_{K} werden, wie oben bereits erwähnt, zunächst eine Antriebsgröße. K_{M} und eine Einfederungszustandsgröße K_{K} bestimmt. Zu deren Berechnung werden am Fahrzeug ohnehin verfügbare Parameter ausgewertet, die, beispielsweise über einen CAN-Bus 15 bereitgestellt werden. Zusätzliche Sensoren werden daher nicht benötigt.

Wie Figur 1 zeigt, kann die Antriebsgröße K_{M} beispielsweise als Funktion des Motormoments T dargestellt werden. Zudem können weitere Parameter wie die Motordrehzahl n und die Getriebestellung g in die Bestimmung der Antriebsgröße K_{M} einfließen.

Die Einfederungszustandsgröße K_{K} ist eine Funktion der Beugewinkeldifferenz Δα der Antriebswellen 12 und 13 sowie gegebenenfalls weiterhin der Federlage f und/oder des Höhenstands h des Fahrzeugs.

Zudem können lenkungsspezifische Parameter wie beispielsweise der Lenkradwinkel δ, die Lenkradwinkelgeschwindigkeit v und das Lenkradmoment M_{F} herangezogen werden, um einen genauen Eingriffszeitpunkt zu identifizieren. In Figur 1 ist dies durch die Lenkungseinflussgröße K_{L} angedeutet.

Aus den genannten Größen K_{M}, K_{K} und ggf. K_{L} wird dann einen Kompensationsmoment M_{K} bestimmt. Vorzugsweise sind die Einflussgrößen K_{M}, K_{K} und K_{L} derart gestaltet, dass diese für die Berechnung des Kompensationsmoments M_{K} bzw. eines entsprechenden Stellsignals s_{K} lediglich miteinander multipliziert werden müssen.

Alternativ hierzu ist es jedoch auch möglich, das Kompensationsmoment M_{K} auf der Grundlage der genannten Einflussgrößen mit Hilfe eines Kennfelds oder weiterer Berechnungsvorschriften zu ermitteln.

Die Berechnung des Kompensationsmoments M_{K} bzw. eines entsprechenden Stellsignals s_{K} kann prinzipiell im Steuergerät 16 der Lenkung erfolgen, das mit dem CAN-Bus 15 kommuniziert.

Da das Kompensationsmoment M_{K} bzw. dessen Bestimmung stark vom Verhalten des Fahrzeugsmotors 8 abhängt, kann dieses auch außerhalb der Lenkung ermittelt werden, so dass der Fahrzeuglenkung eine auf diese normierte Korrekturgröße übermittelt wird. Dies hat den Vorteil, das die Lenkung 1 nicht individuell an die betreffende Fahrzeugkonfiguration und - motorisierung angepasst werden braucht. Das Steuergerät 16 der Lenkung ist hierzu mit einer geeigneten Schnittstelle 17 ausgestattet, über die auch weitere Kompensationsgrößen eingekoppelt werden können, wie dies beispielsweise in der DE 10 2004 041 413.0 für eine dynamische Lenkempfehlung beschrieben ist.

Das Steuergerät muss jedoch nicht notwendigerweise ein eigenes externes Steuergerät sein. Vielmehr kann dessen Funktion auch in einem bereits am Fahrzeug vorhandenen Steuergerät, z. B. in einem Lenkungssteuergerät untergebracht werden.

Vorstehend wurde die Kompensation eines aus der Asymmetrie der Antriebswellen resultierenden Schiefzieheffekts im Zusammenhang mit einer elektromechanischen Lenkung erläutert, wobei als Stellgröße das Lenkmoment dient. Fällt bei einer solchen Lenkung eine unmittelbare mechanische Verbindung zwischen dem Lenkrad 2 und dem Lenkgetriebe 4 fort, so kann das fahrerseitig verursachte Lenkmoment M_{F} allein über den Lenkungsaktuator 5 erzeugt werden.

Das erfindungsgemäße Prinzip kann auch bei einer Überlagerungslenkung, wie sie beispielsweise in der DE 10 2004 009 522.1 beschrieben wird, zum Einsatz kommen. In diesem Fall dient als Stellgröße dann der Lenkwinkel der Fahrzeugräder.

Bevorzugtes Einsatzgebiet sind frontgetriebene Personkraftfahrzeuge. Ein Einsatz bei allradgetriebenen Fahrzeugen einschließlich SUVs ist ebenfalls möglich.

Die Erfindung wurde vorstehend anhand eines bevorzugten Ausführungsbeispiels näher erläutert. Sie ist jedoch nicht auf dieses beschränkt, sondern umfasst alle durch die Patentansprüche definierten Ausgestaltungen.

### Bezugszeichenliste

- 1: elektromechanische Lenkung
- 2: Lenkrad
- 3: Lenksäule
- 4: Lenkgetriebe
- 5: Lenkungsaktuator (z.B. Elektromotor)
- 6: Lenkmomentsensor
- 7: Lenkungssteuergerät
- 8: Fahrzeugmotor
- 9: Getriebe
- 10: Fahrzeugrad
- 11.: Fahrzeugrad
- 12: kurze Antriebswelle
- 13: lange Antriebswelle
- 14: Kompensationseinrichtung
- 15: CAN-Bus
- 16: Schnittstelle
- f: Federlage
- g: Getriebestellung
- h: Höhenstand des Fahrzeugs
- K_{K}: den Einfederungszustand repräsentierende Größe bzw. Einfederungszustandsgröße
- K_{L}: Lenkungsgröße
- K_{M}: das Antriebsmoment repräsentierende Größe bzw. Antriebsgröße
- M_{F}: fahrerseitiges Lenkmoment
- M_{K}: Kompensationsmoment
- M_{L}: Hilfslenkmoment
- n: Motordrehzahl
- s: kombiniertes Signal
- s_{F}: Signal des Fahrerlenkmoments M_{F}
- s_{K}: Signal für das Kompensationslenkmoment M_{K} bzw. Korrektursignal
- T: Moment des Fahrzeugmotors
- v: Lenkradwinkelgeschwindigkeit
- α₁: Beugewinkel der kurzen Antriebswelle
- α₂: Beugewinkel der langen Antriebswelle
- ö: Lenkradwinkel

## Patentansprüche

1. Einrichtung zum Kompensieren eines aus Antriebswellen (12, 13) unterschiedlicher Länge resultierenden, geometriebedingten Schiefzieheffekts an einem Kraftfahrzeug über eine Fahrzeuglenkung, **dadurch gekennzeichnet, dass** diese aus mindestens einer Größe (K_{M}), die das Antriebsmoment des Fahrzeugs repräsentiert, unter Berücksichtigung für ein asymmetrisches Beugungsverhalten der Antriebswellen (12, 13) relevanter Geometriedaten (K_{K}) ein Korrektursignal (s_{K}) errechnet,und als eine den geometriebedingten Schiefzieheffekt ausgleichende Größe dem Stellsignal (s_{L}) der Lenkung überlagert.

2. Einrichtung nach Anspruch 1, **dadurch gekennzeichnet, dass** eine Größe (K_{K}), die den Einfederungszustand der angetriebenen Fahrzeugräder repräsentiert, in die Bestimmung des Korrektursignals (s_{K}) einfließt

3. Einrichtung nach Anspruch 1 oder 2, **dadurch gekennzeichnet, dass** eine Lenkradgröße (K_{L}) in die Bestimmung des Korrektursignals (s_{K}) einfließt, die eine Funktion des Lenkradwinkels und/oder der Lenkradwinkelgeschwindigkeit und/oder des Lenkradmoments ist.

4. Einrichtung nach einem der Ansprüche 1 bis 3, **dadurch gekennzeichnet, dass** die Antriebsgröße (K_{M}) eine Funktion des Motormoments, der Motordrehzahl und der Getriebestellung ist.

5. Einrichtung nach einem der Ansprüche 2 bis 4, **dadurch gekennzeichnet, dass** die Einfederungszustandsgröße (K_{K}) eine Funktion der Beugewinkeldifferenz der Antriebswellen (12, 13) und gegebenenfalls weiterhin der Federlage und/oder des Höhenstands des Fahrzeugs ist.

6. Einrichtung nach einem der Ansprüche 2 bis 5, **dadurch gekennzeichnet, dass** die in das Korrektursignal (s_{K}) eingehenden Größen, nämlich die Antriebsgröße (K_{M}), die Einfederungszustandsgröße (K_{K}) und eine gegebenenfalls berücksichtigte Lenkradgröße (K_{L}) multiplikativ verknüpft sind.

7. Einrichtung nach einem der Ansprüche 1 bis 6, **dadurch gekennzeichnet, dass** die Eingangsparameter zur Korrektursignalermittlung in einem Datenbussystem (15) des Fahrzeugs verfügbar sind.

8. Einrichtung nach einem der Ansprüche 1 bis 7, **dadurch gekennzeichnet, dass** die Lenkung ein Steuergerät (7) zur Bestimmung des Stellsignals (s_{L}) umfasst, das eine Schnittstelle (16) zur Einkopplung von Korrektursignalen (s_{K}) aufweist.

9. Einrichtung nach einem der Ansprüche 1 bis 8, **dadurch gekennzeichnet, dass** das Korrektursignal (s_{K}) dem Stellsignal (s_{L}) sprungfrei überlagert wird.

10. Einrichtung nach einem der Ansprüche 1 bis 9, **dadurch gekennzeichnet, dass** die Stellgröße das Lenkmoment ist.

11. Einrichtung nach einem der Ansprüche 1 bis 10, **dadurch gekennzeichnet, dass** die Lenkung eine elektromechanische Lenkung ist.

12. Einrichtung nach einem der Ansprüche 1 bis 9, **dadurch gekennzeichnet, dass** die Lenkung als Überlagerungslenkung ausgebildet ist und die Stellgröße der Lenkwinkel der Fahrzeugräder ist.

## Claims

1. Device for compensating for a geometrically induced steering-pull effect, resulting from drive shafts (12, 13) of different length, in a motor vehicle via a vehicle steering system, **characterized in that** said device calculates a correction signal (s_{K}) from at least one variable (K_{M}) which represents the drive torque of the vehicle, taking into account geometrical data (K_{K}) which are relevant for an asymmetrical bending behaviour of the drive shafts (12, 13), and superimposes said correction signal (s_{K}) on the actuation signal (s_{L}) of the steering system as a variable which compensates the geometrically induced steering-pull effect.

2. Device according to Claim 1, **characterized in that** a variable (K_{K}) which represents the spring compression state of the driven vehicle wheels is included in the determination of the correction signal (s_{K}).

3. Device according to Claim 1 or 2, **characterized in that** a steering wheel variable (K_{L}) which is a function of the steering wheel angle and/or of the steering wheel angle speed and/or of the steering wheel torque is included in the determination of the correction signal (s_{K}) .

4. Device according to one of Claims 1 to 3, **characterized in that** the drive variable (K_{M}) is a function of the engine torque, of the engine speed and of the setting of the gear mechanism.

5. Device according to one of Claims 2 to 4, **characterized in that** the spring compression state variable (K_{K}) is a function of the difference in bending angle between the drive shafts (12, 13) and, if appropriate, also of the spring compression position and/or the vertical level of the vehicle.

6. Device according to one of Claims 2 to 5, **characterized in that** the variables which are included in the correction signal (s_{K}), specifically the drive variable (K_{M}), the spring compression state variable (K_{K}) and a steering wheel variable (K_{L}) which is possibly taken into account, are combined multiplicatively.

7. Device according to one of Claims 1 to 6, **characterized in that** the input parameters for the determination of the correction signal are available in a databus system (15) of the vehicle.

8. Device according to one of Claims 1 to 7, **characterized in that** the steering system comprises a control unit (7) for determining the actuation signal (s_{L}) which has an interface (16) for inputting correction signals (s_{K}) .

9. Device according to one of Claims 2 to 8, **characterized in that** the correction signal (s_{K}) is superimposed without a jump on the actuation signal (s_{L}).

10. Device according to one of Claims 1 to 9, **characterized in that** the actuation variable is the steering torque.

11. Device according to one of Claims 1 to 10, **characterized in that** the steering system is an electromechanical steering system.

12. Device according to one of Claims 1 to 9, **characterized in that** the steering system is embodied as a superimposition steering system, and the actuation variable is the steering angle of the vehicle wheels.

## Revendications

1. Dispositif pour compenser un effet de déséquilibre au niveau d'un véhicule automobile, dû à la géométrie, résultant d'arbres d'entraînement (12, 13) de différentes longueurs, par le biais d'une direction du véhicule, **caractérisé en ce que** celui-ci, à partir d'au moins une grandeur (K_{M}), qui représente le couple d'entraînement du véhicule, en tenant compte de données géométriques (K_{K}) pertinentes pour un comportement de diffraction asymétrique des arbres d'entraînement (12, 13), calcule un signal de correction (s_{K}) et le superpose, en tant que grandeur compensant l'effet de déséquilibre dû à la géométrie, au signal de commande (s_{L}) de la direction.

2. Dispositif selon la revendication 1, **caractérisé en ce qu'**une grandeur (K_{K}) qui représente l'état de course de compression des roues motrices du véhicule est prise en compte dans la détermination du signal de correction (s_{K}).

3. Dispositif selon la revendication 1 ou 2, **caractérisé en ce qu'**une grandeur du volant de direction (K_{L}) est prise en compte dans la détermination du signal de correction (s_{K}), laquelle est une fonction de l'angle du volant de direction et/ou de la vitesse angulaire du volant de direction et/ou du couple du volant de direction.

4. Dispositif selon l'une quelconque des revendications 1 à 3, **caractérisé en ce que** la grandeur d'entraînement (K_{M}) est une fonction du couple moteur, du régime du moteur et de la position de la transmission.

5. Dispositif selon l'une quelconque des revendications 2 à 4, **caractérisé en ce que** la grandeur d'état de course de compression (K_{K}) est une fonction de la différence d'angle de diffraction des arbres d'entraînement (12, 13) et éventuellement aussi de la position de la suspension et/ou du niveau en hauteur du véhicule.

6. Dispositif selon l'une quelconque des revendications 2 à 5, **caractérisé en ce que** les grandeurs prises en compte dans le signal de correction (s_{K}), à savoir la grandeur d'entraînement (K_{M}), la grandeur d'état de course de compression (K_{K}) et une grandeur du volant de direction éventuellement prise en compte (K_{L}), sont mises en relation multiplicative.

7. Dispositif selon l'une quelconque des revendications 1 à 6, **caractérisé en ce que** les paramètres d'entrée pour la détermination du signal de correction peuvent être fournis dans un système de bus de données (15) du véhicule.

8. Dispositif selon l'une quelconque des revendications 1 à 7, **caractérisé en ce que** la direction comprend un appareil de commande (7) pour déterminer le signal de commande (s_{L}), qui présente une interface (16) pour l'introduction de signaux de correction (s_{K}).

9. Dispositif selon l'une quelconque des revendications 1 à 8, **caractérisé en ce que** le signal de correction (s_{K}) est superposé sans saut au signal de commande (s_{L}).

10. Dispositif selon l'une quelconque des revendications 1 à 9, **caractérisé en ce que** la grandeur de commande est le couple de volant de direction.

11. Dispositif selon l'une quelconque des revendications 1 à 10, **caractérisé en ce que** la direction est une direction électromécanique.

12. Dispositif selon l'une quelconque des revendications 1 à 9, **caractérisé en ce que** la direction est réalisée sous forme de direction superposée et la grandeur de commande est l'angle de braquage des roues du véhicule.
